# EUROPEAN PATENT SPECIFICATION

(11) **EP 3 583 342 B1**
(45) Date of publication and mention of the grant of the patent: **08.07.2020**
(21) Application number: 18833539.2
(22) Date of filing: 20.12.2018
(51) Int. Cl.: F16L 19/08

(54) **A SCREW FITTING FOR A GAS PIPE MADE OF METAL MATERIAL**
SCHRAUBVERBINDUNG FÜR EIN GASROHR AUS METALL
RACCORD À VIS POUR TUYAU DE GAZ MÉTALLIQUE

(30) Priority: 22.02.2018 IT 201800002959; 31.10.2018 IT 201800009954
(43) Date of publication of application: 25.12.2019
(73) Proprietor: Tapel di Mastromatteo Ciro & C. S.a.s, 36043 Camisano Vicentino (IT)
(72) Inventor: MASTROMATTEO, Ciro, 36043 Camisano Vicentino (V)) (IT)
(74) Representative: Autuori, Angelo
(86) International application number: PCT/IB2018/060451
(87) International publication number: WO 2019/162752

(56) References cited:
- EP-A2- 1 840 441
- WO-A1-2012/027785
- WO-A1-2012/140480
- FR-A- 1 335 121
- GB-A- 576 862
- GB-A- 1 267 748
- US-A- 2 252 920
- US-A- 3 069 188

## Description

### Field of the invention

The present invention generally regards the technical field of fittings for pipes, and it particularly regards a metal screw fitting for gas pipes.

### State of the Art

Various types of pipe fittings designated for transporting gas, for example the copper pipes present in a refrigeration and/or conditioning system.

Such fittings for gas pipes must guarantee, besides naturally a sufficient mechanical sealing on the pipe, a high pneumatic sealing with respect to the gas. The latter is necessary in light of the fact that in such pipes the gas generally circulates at a considerably high pressure.

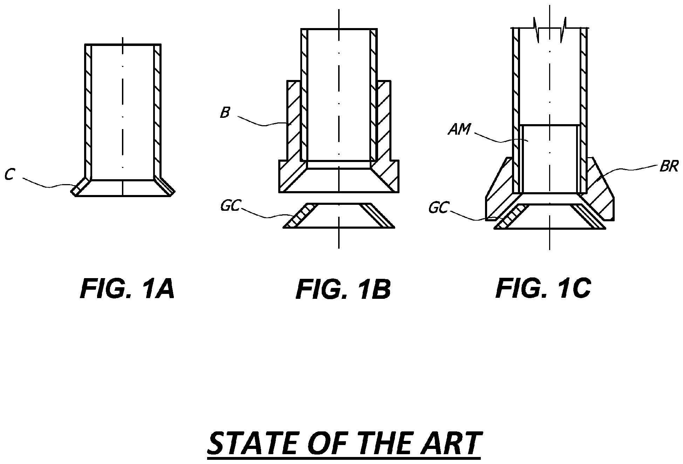

To this end, often used are elastomeric gaskets or, for example as illustrated in FIG. 1C, conical copper gaskets **GC.**

In the latter case, inserted outside the surface is a rigid bushing **BR**, while the internal of the pipe is inserted into a metal core **AM.** The latter and the rigid bushing **BR** are then radially compressed to guarantee the mechanical sealing on the pipe.

Furthermore, for example as illustrated in FIG. 1A, obtained on the edge of the pipe is the so-called "folder" **C**, i.e. conical gaskets obtained by deforming the pipe.

Another possible solution for guaranteeing the mechanical sealing of the pipe and the soldering of a bushing **B** thereof, as illustrated in FIG. 1B and as disclosed in the United States patent application n° US2014/0339818. A gasket **GC** is then arranged on the bushing **B**.

All such known solutions reveal some disadvantages.

For example, the elastomeric gaskets are only compatible with some types of gas and, over time, they reveal a particularly high wear.

On the other hand, the obtainment of the folders and/or the soldering requires the use of appropriate tools and a particular technical expertise.

A disadvantage common to all solutions of the prior art lies in that the pneumatic sealing reduces over time, with ensuing more or less leakage of gas from the pipe and the need to replace the gasket or the entire pipe.

Document FR1335121 reveals a fitting for hydraulic pipes including a clamping element embedded in an elastomeric gasket.

### Summary of the invention

An object of the present invention is to at least partly overcome the aforementioned drawbacks, by providing a metal fitting that is highly functional and inexpensive.

A particular object of the present invention is to provide a fitting that is particularly easy to use for any operator of the sector, even if not particularly specialised.

A particular object of the present invention is to provide a fitting that does not require particular tools so as to be made operative.

Another object of the invention is to provide a fitting capable of guaranteeing an optimal mechanical and pneumatic sealing of the gas pipe.

Another object of the invention is to provide a fitting that can be used independently from the type of gas transported in the pipe.

A further object of the invention is to guarantee the pneumatic and mechanical sealing of the pipe over time.

These and other objects to be further clarified hereinafter, are achieved by a fitting as defined in claim 1.

Advantageous embodiments of the invention are defined according to the dependent claims.

### Brief description of the drawings

Further characteristics and advantages of the invention will be more apparent in light of the detailed description of some preferred but non-exclusive embodiments of the invention, illustrated by way of non-limiting example with reference to the attached drawings, wherein:
**FIGS. 1A, 1B, 1C** illustrate some solutions of the prior art;
**FIGS. 2A** and **2B** are respectively a front and axial sectional view of an embodiment of the ring nut **30**;
**FIGS. 2C** and **2D** are respectively an axonometric and axial sectional view of the clamping element **10** part of the screw fitting **1**;
**FIGS. 2E** and **2F** are respectively a front and axial sectional view of the threaded coupling end member **40**;
**FIGS. 3** to **7** are axial sectional views of the fitting **1** upon the mutual screwing of the ring nut **30** and the threaded coupling end member **40** in different operative steps, with in FIGS. **3A, 4A****,** **5A, 5B****,** **6A** and **7A** some enlarged details;
**FIG. 8** is a schematic view of the end portion **F** of the pipe **P** after the full mutual screwing of the ring nut **30** and of the threaded coupling end member **40;**
**FIGS. 9A, 9B****,** **10A, 10B****,** **11, 12** and **13** are various embodiments of components that include the threaded coupling end member **40**;
**FIG. 14** is an axial sectional view of a further embodiment of the ring nut **30**;
**FIG. 15** is an axonometric view of elastic ring **50**;
**FIG. 16** is an axial sectional view of the assembly consisting of a ring nut **30**, elastic ring 50 and clamping element **10.**

### Detailed description of some preferred embodiments

With reference to the mentioned figures, herein described is a screw fitting **1** for gas pipes **P** made of metal.

In particular, the fitting **1** is particularly indicated for pipes **P** for transporting gas, said gas pipes being of the type for example present in an air conditioning system. The gas pipes **P** are made of metal material, for example copper.

Advantageously, the fitting **1** may be without elastomeric gaskets. This will allow avoiding the disadvantages described above.

In any case, in a pipe **P**, which may define an axis **X**, there may be distinguished an end portion **F** and an end edge **E**.

The present invention has various parts that are equal or however equal to each other. Unless otherwise specified, such parts that are equal or similar will be indicated with a single reference number, it being intended that the indicated characteristics are common to all equal or similar parts.

The fitting **1** comprises a ring nut **30**, a threaded coupling end member **40** and a clamping element **10**, coupled coaxially to each other.

The ring nut **30**, the end member **40** and the clamping element **10** are made of metal material, for example brass or steel.

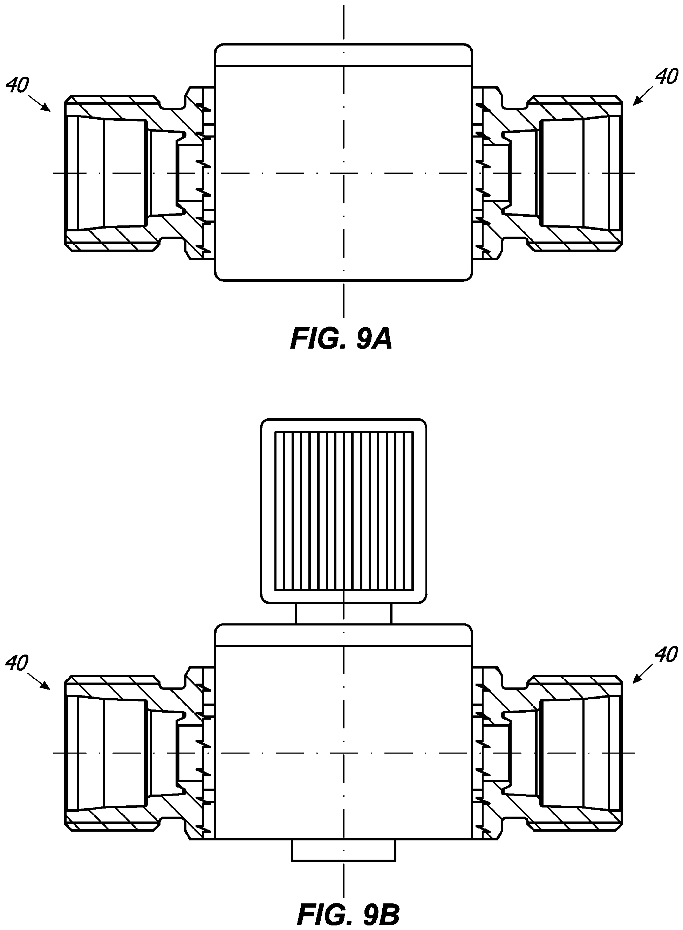

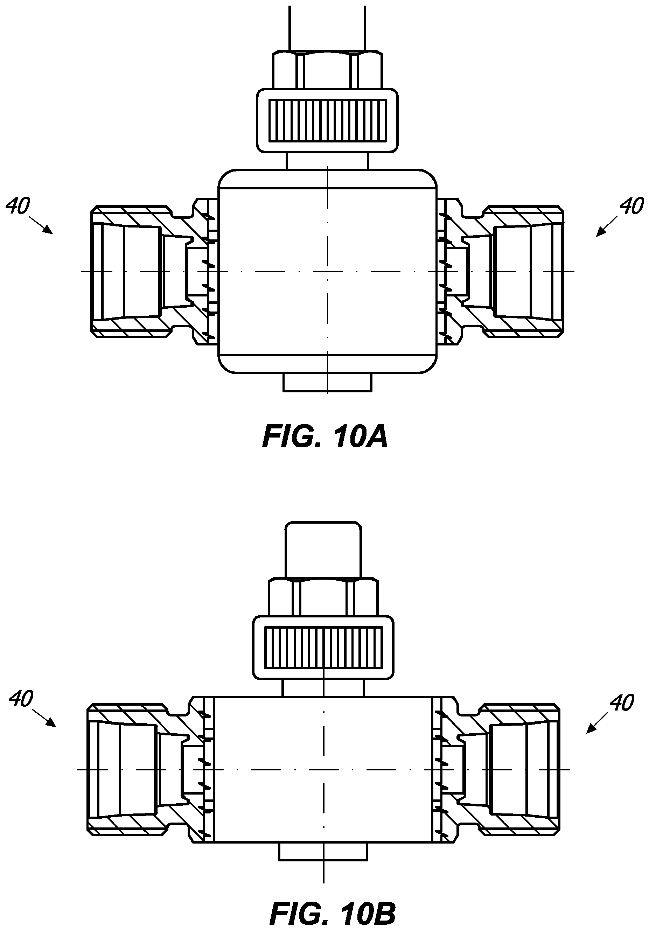

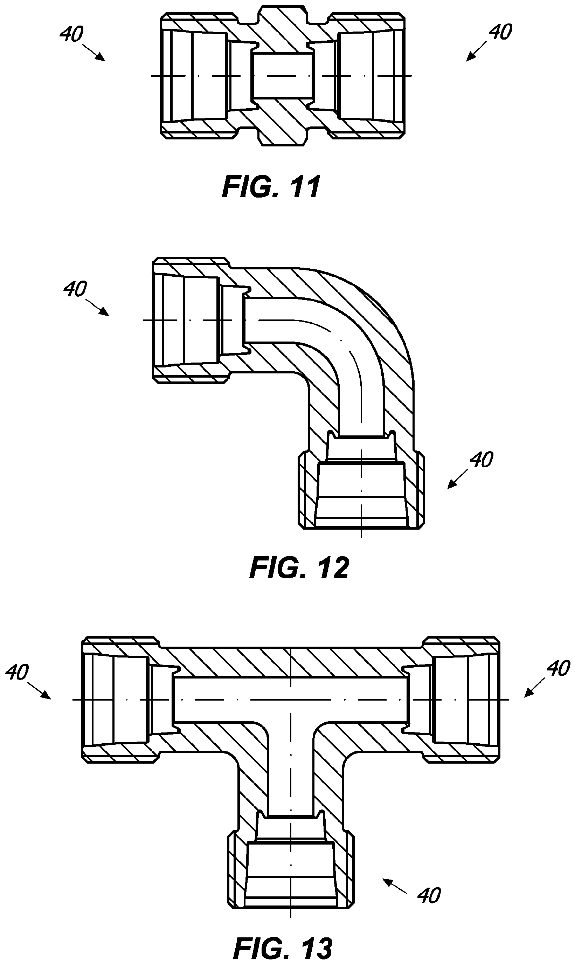

As observable from FIGS. 9A, 9B, 10A, 10B, 11, 12 and 13, the threaded coupling end member **40** may be an integral part of various components for gas lines, for example valves as illustrated in FIGS. 9A to 10B or fittings of various types as illustrated in FIGS. 11 to 13.

The ring nut **30** is of the type that can be screwed on the threaded coupling end member **40** with the interposition of the clamping element **10**. Upon such screwing, the pipe **P** may be inserted into the threaded coupling end member **40**, with the ring nut **30** and the clamping element **10** fitted onto the outer surface thereof.

In order to allow the screwing, the ring nut **30** may have an outer surface **31** suitable to be gripped by an operator or be engaged by a special tool, for example a spanner.

It is clear that even though the ring nut **30** will hereinafter be indicated as of the type that can be screwed onto the threaded coupling end member **40**, the opposite may also occur, i.e. that the latter be of the type that can be screwed, or both be of the type that can be screwed one with respect to each other, without departing from the scope of protection of the attached claims.

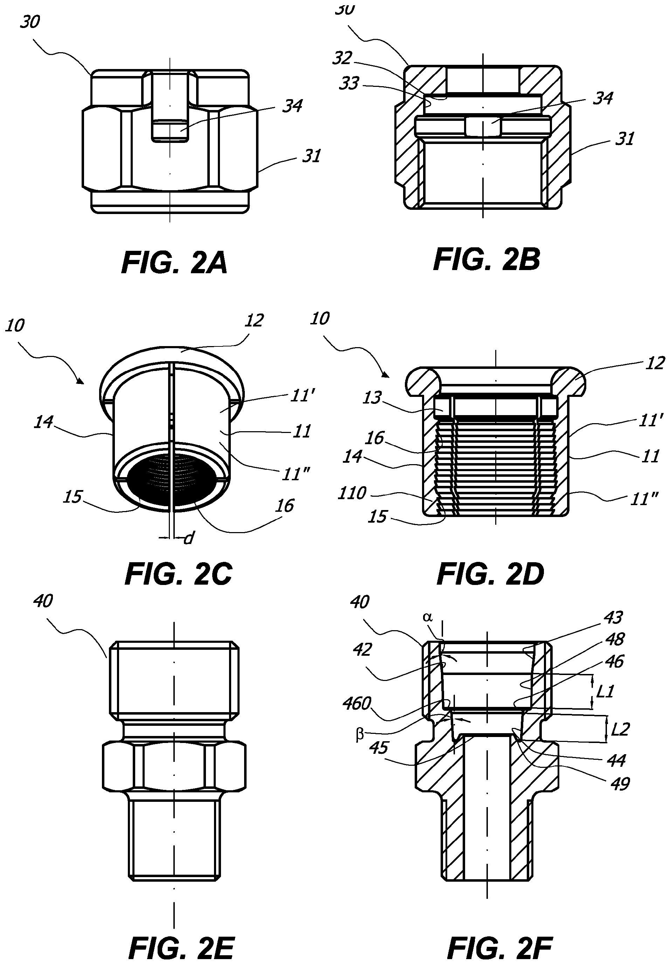

As particularly illustrated in FIGS. 2C and 2D, the clamping element **10**, which for example may be made of brass or steel, may have two or more gripping clamps **11** integrally joined and transversely extending from a support rigid ring **12**.

It is clear that the clamps **11** may be of any number, as long as greater or equal to 2, without departing from the scope of protection of the attached claims.

As observable more in detail hereinafter, the screwing of the ring nut **30** onto the threaded coupling end member **40** may promote the radial compression of the clamps **11** onto the pipe **P**, which will be deformed up to forming an annular gripping groove **G**.

The latter will allow a permanent mechanical connection between the pipe **P** and the clamping element **10**.

To this end, the hardness of the metal material of the clamping element **10** may be greater than that of the metal material of the pipe **P**. Furthermore, the metal material of the clamping element **10** may have a greater rigidity so as to be permanently deformed on the pipe **P**. In other words, the clamping element **10** is deformed plastically and not elastic.

Due to such deformation, the assembly between the pipe **P** and clamping element **10** will be of the unitary type.

Each of the clamps **11** has two end portions, a first one **11'** facing towards the rigid ring **12** and a second one **11"** in an opposite position.

Suitably, each end portion **11"** is radially expanded to define a jaw **110** suitable to form the aforementioned gripping groove **G**.

Preferably, an annular groove **13,** which facilitates the controlled radial compression of the clamps **11** may be interposed between the rigid ring **12** and the first end portions **11'.**

The latter may also have an outer surface **14** and an inner surface **15.**

The outer surface **14** may be designated to remain faced to the inner part of the ring nut **30** and the inner portion **42** of the threaded coupling end member **40,** while projections **16** for gripping on the pipe **P** may be present on the inner surface **15.**

Advantageously, the clamps **11** may substantially be defined by circumferential arcs, which may be arranged consecutively adjacent to each other and spaced by a distance **d,** as illustrated in FIG. 2C.

Thus, the radial compression of the clamps **11** will cease when the same will come into mutual contact.

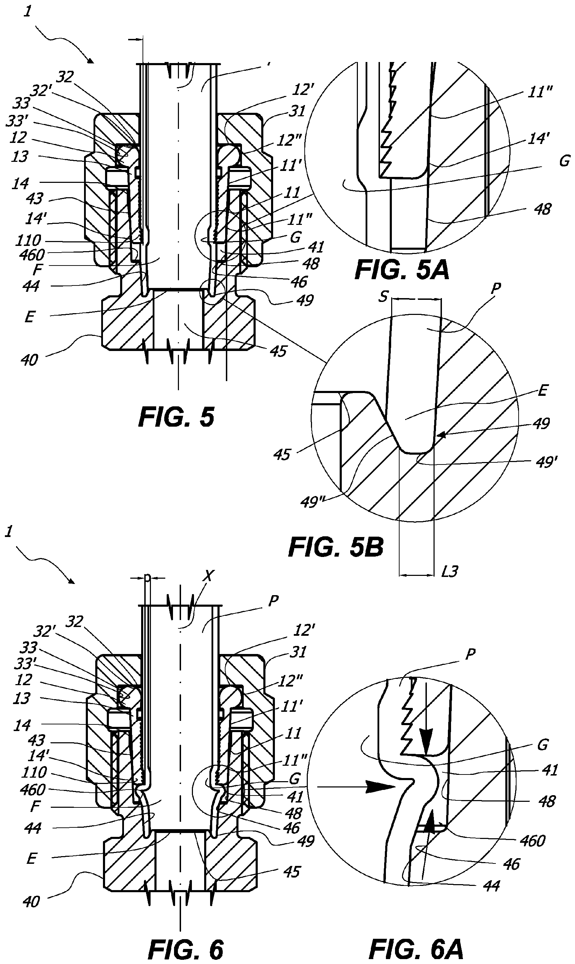

As particularly illustrated for example in FIG. 5A, the gripping groove **G** may have a depth **p** substantially equal to the distance **d.**

Suitably, the rigid ring **12** may have a first and a second substantially curved annular portion **12', 12"** suitable to come into contact respectively with a first and a second inner surface **32, 33** of the ring nut **30.**

Thus, the points of mutual contact between the latter and the clamping element **10** may be defined by single points of tangency **32', 33',** so as to allow avoiding possible torsions of the pipe **P** upon the mutual screwing of the ring nut **30** and the threaded coupling end member **40.**

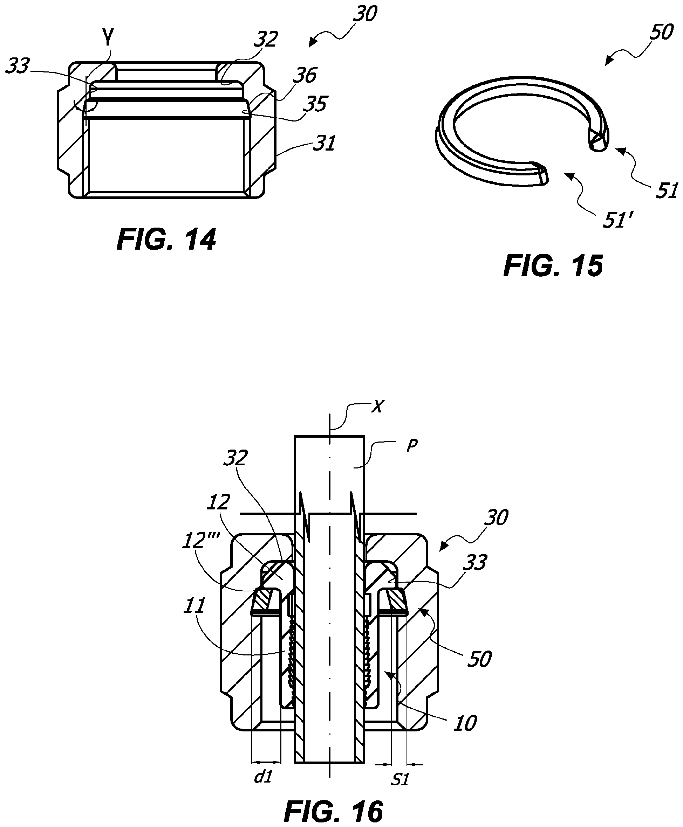

In a preferred but non-exclusive embodiment, illustrated for example in FIG. 14, the ring nut **30** may comprise a groove **36** extending externally with respect to the surface **33.**

The latter may for example have an angulation **γ** comprised between 20° and 30°, and preferably 25°.

Such groove **36** may house an elastic ring **50** susceptible to come into mutual contact with the rigid ring **12** in a contact portion **12'"** and with the inner surface **35** of the groove **36.**

Thus, the rigid ring **12** may remain interposed between the ring **50** and the inner surface **35.** More precisely, the rigid ring **12** will impact against the elastic ring **50,** so as to remain in operative position.

In order to simplify the assembly of the fitting **1,** the elastic ring **50** may pass from a minimum radial expansion position that allows the insertion thereof into the ring nut **30** to a maximum radial expansion to allow the snap-insertion thereof into the groove **36** of the ring nut **30** and prevent the axial slipping off of the rigid ring **12,** which will however be free to rotate in the ring nut **30.**

To this end, an operator may elastically force the elastic ring **50** from the maximum expansion position towards the minimum expansion position. As a matter of fact, the maximum expansion position is the same that the elastic ring **50** takes when inoperative, i.e. when it is not subjected to external stresses.

Thus, the clamping element **10** and the ring nut **30** may form a unitary assembly.

Advantageously, the ring **50** may be made of plastic material, for example nylon 6,6.

The ring **50** may substantially be C-shaped comprising two ends **51, 51'** faced to each other susceptible to be approached and moved away respectively when the ring **50** is in the minimum and maximum radial expansion positions.

Preferably, the ring **50** may have a predetermined maximum thickness **S1** substantially equivalent to the distance **d1** between the inner surface of the ring nut **30** and the outer surface **14** of the clamping element **10.**

Suitably, the inner portion **42** of the threaded coupling end member **40** comprises two frusto-conical surfaces **43, 44,** coaxial and convergent with respect to the axis **X,** a sliding surface **48** interposed between them and an abutment surface **45.**

Preferably, the first frusto-conical surface **43** may have a first angulation **α** comprised between 4° and 8°, and preferably 6°, while the second frusto-conical surface **44** may have a second angulation **β** comprised between 0.5° and 2,5°, and preferably 1.5°.

Preferably, between the sliding surface **48** and the second frusto-conical surface **44** there may be present a draft surface **46** also substantially frusto-conical-shaped and an abutment surface **460,** substantially flat and perpendicular with respect to the axis **X,** whose function will be clearer hereinafter.

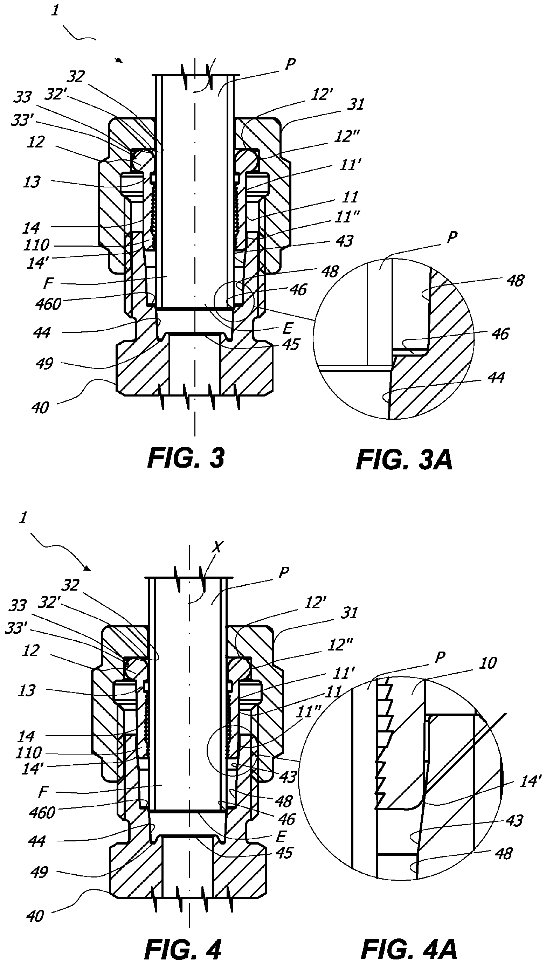

Operatively, as illustrated in FIG. 3 to 7, upon inserting the pipe **P** into the coupling end member **40** the end edge **E** thereof will come into contact with the draft surface **46,** while the first frusto-conical surface **43** will come into contact with the clamps **11** in a single of point of tangency **14'.**

Advantageously, the draft surface **46,** which may have an angulation comprised between 12° and 18° and preferably 15°, may act as means for the abutment and centring of the pipe **P.** To this end, the diameter of the hole may be lesser than the outer diameter of the pipe **P.**

The screwing of the ring nut **30** on the threaded coupling end member **40** will promote the radial compression of the clamps **11** on the pipe **P,** with the ensuing formation of the annular gripping groove **G** thereon.

Thus, the pipe **P** and the clamping element **10** will remain mechanically connected in an integral manner. As a matter of fact, subsequently to such mechanical connection the axial translation of the clamping element **10** promoted by the further screwing of the ring nut **30** on the threaded coupling end member **40** will also cause the simultaneous axial translation of the pipe **P.** In other words, the latter and the clamping element **10** will form the unitary assembly.

Due to the fact that the first frusto-conical surface **43** will come into contact with the clamps **11** in the single point of tangency **14',** the radial compression of the clamps **11** will occur with minimum friction.

The further screwing of the ring nut **30** on the threaded coupling end member **40** will promote the contact of the clamps **11** with the sliding surface **48,** that will allow the axial sliding of the unitary assembly between the pipe **P** and the clamping element **10.**

Such axial sliding will cause the slipping of the draft surface **46** beyond by the end edge **E** of the pipe **P,** so that the end portion **F** thereof comes into contact with the second frusto-conical surface **44** so as to be radially compressed thereby and define first pneumatic sealing means.

The axial sliding of the unitary assembly between the pipe **P** and the clamping element **10** promoted by the further screwing of the ring nut **30** on the threaded coupling end member **40** will cease when the end edge **E** of the pipe **P** will come into contact with the abutment surface **45.**

The axial compression between the latter and the pipe will define second pneumatic sealing means.

More in particular, in a preferred but non-exclusive embodiment, the abutment surface **45** may be defined by an internally tapered annular groove **49** so that the bottom wall **49'** thereof has a width **L3** smaller than the thickness **S** of the end edge **E** of the pipe **P.**

Thus, the aforementioned pneumatic sealing will operate both on the bottom wall **49'** and on the tapering **49".**

Advantageously, the sliding surface **48** may be substantially frusto-conical, convergent with respect to the axis **X** and coaxial with respect to the frusto-conical surface **43, 44.**

Furthermore, such sliding surface **48** may suitably have a length **L1** greater than that **L2** of the second frusto-conical surface **44.** Thus, there will be created a chamber **41** between the abutment surface **460** and the end **11"** of the clamps **11** suitable for the radial expansion of the pipe **P.**

As a matter of fact, the further screwing of the ring nut **30** on the threaded coupling end member **40** with the end edge **E** of the pipe **P** at contact with the abutment surface **45** will cause the radial expansion of the pipe **P** in the chamber **41.**

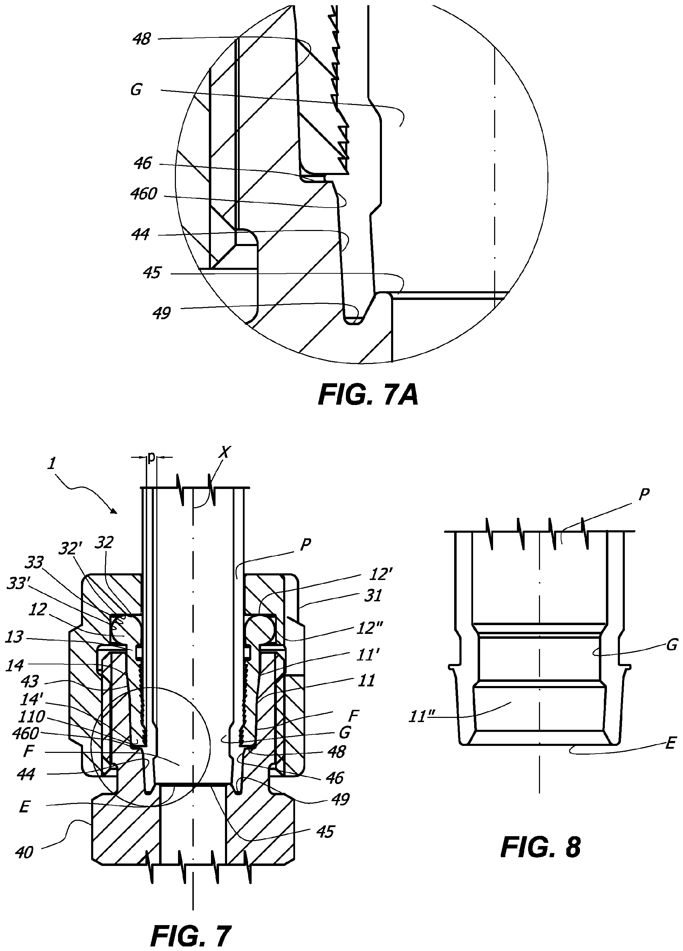

As the ring nut **30** is progressively screwed onto the threaded coupling end member **40,** then, the end portion **11"** of the clamps **11** will move between a distal position from the abutment surface **460** and a position proximal thereto, in particular illustrated in FIG. 7.

In such position, the end **11"** of the clamps **11** may come into contact with the pipe portion **P** expanded in the expansion chamber **41,** so as to deform it against the abutment surface **460** to define third pneumatic sealing means and a further safety mechanical connection, in particular against water hammer.

As particularly illustrated in FIG. 8, the pipe portion **P** interposed between the end **11"** of the clamps **11** and the abutment surface **460** may be generally flat-shaped, so as to form a true sealed barrier.

Suitably, at the first, second and third pneumatic sealing means mentioned above, the surfaces at mutual contact may have high brightness.

Suitably, the ring nut **30** may include one or more inspection holes **34,** so as to allow the operator to visually check the relative position of the ring nut and of the threaded coupling end member **40.**

A creaking-like sound, indicating that the ring nut **30** has reached the end-stop, will be heard at the end of the screwing between the ring nut **30** and the threaded end member **40.**

In light of the above, it is clear that the invention attains the pre-set objectives.

The invention is susceptible to numerous modifications and variants all falling within the inventive concept outlined in the attached claims.

## Claims

1. A screw fitting for a pipe (**P**) comprising an end portion (**F**) having an end edge (**E**), the fitting comprising:
- a metal threaded coupling end member (**40**) defining an axis (**X**) having an inner shaped portion (**42**) designated to be mutually faced with the end portion (**F**) of the pipe (**P**);
- a metal ring nut (**30**) that can be mutually screwed with said threaded coupling end member (**40**);
- a metal clamping element (**10**) that can be fitted on the pipe (**P**) to remain coaxially interposed between said threaded coupling end member (**40**) and said ring nut (**30**), the latter having a first inner surface (**32**) susceptible to come into mutual contact with said clamping element (**10**) upon the mutual screwing of said ring nut (**30**) and said threaded coupling end member (**40**) to promote the relative axial translation of the latter (**40**) and said clamping element (**10**);
wherein said clamping element (**10**) comprises a ring (**12**) having at least one first annular portion (**12**') for contact with said first inner surface (**32**) of said ring nut (**30**) and at least one pair of gripping clamps (**11**) extending transversely from said ring (**12**), each of said clamps (**11**) having a first end portion (**11**') facing towards the ring (**12**) and a second opposite end portion (**11**");
wherein said shaped inner portion (**42**) of the threaded coupling member (**40**) comprises, in sequence, at least one first frusto-conical surface (**43**), at least one sliding surface (**48**), at least one second frusto-conical surface (**44**) and at least one abutment surface (**45**), said at least one first and second frusto-conical surface (**43**, **44**) being coaxial and converging towards said axis (**X**);
wherein the screw fitting is for use with a gas pipe (**P**) made of metal material, the ring (**12**) of said clamping element (**10**) being a rigid ring, the second opposite end portion (**11**") of said clamps (**11**) being radially expanded towards said axis (**X**) to define a clamping jaw (**110**); and further
said clamping element (**10**) and said shaped inner portion (**42**) being mutually dimensioned so that upon the mutual screwing of said ring nut (**30**) and said threaded coupling end member (**40**), when fitting a pipe:
- said at least one first frusto-conical surface (**43**) comes into mutual contact with said clamps (**11**) to permanently radially compress said clamping jaws (**110**) on the pipe (**P**), so that the latter form an annular gripping groove (**G**) on the pipe (**P**) to mechanically integrally connect the pipe (**P**) and said clamping element (**10**);
- following such mechanical connection, said at least one sliding surface (**48**) comes into mutual contact with said clamps (**11**) to allow the integrally joined axial sliding of the pipe (**P**) and said clamping element (**10**); and
- following such mechanical connection and said integrally joined sliding:
- said second frusto-conical surface (**44**) comes into mutual contact with the end portion (**F**) of the pipe (**P**) to radially compress it, so as to define a first pneumatic sealing means; and
- said abutment surface (**45**) of said threaded coupling end member (**40**) is at mutual contact with the end edge (**E**) of the pipe (**P**) to compress it axially, so as to define a second pneumatic sealing means.

2. Fitting according to claim 1, wherein, said clamping element (**10**) comprises an annular groove (**13**) interposed between said rigid ring (**12**) and the first end portions (**11**') of said clamps (**11**) to allow the controlled radial compression of the latter.

3. Fitting according to claim 1 or 2, wherein each of said clamps (**11**) has an outer surface (**14**) susceptible to come into contact with said first frusto-conical surface (**43**) and an inner surface (**15**) comprising a plurality of gripping projections (**16**) susceptible to at least partly come into contact with the pipe (**P**) upon the radial compression of said clamps (**11**).

4. Fitting according to the preceding claim, wherein the outer surface (**14**) of each of said clamps (**11**) has a second contact portion (**14**') with said first frusto-conical surface (**43**), said second contact portion (**14**') being substantially curved so that it comes into contact in a single first point of tangency, so as to minimise mutual friction.

5. Fitting according to any one of the preceding claims, wherein each of said clamps (**11**) defines a circumferential arc, the clamps of each pair of consecutive clamps (**11**, **11**) being arranged side-by-side and spaced apart with respect to each other by a predetermined distance (**d**) so that upon the compression on the pipe (**P**) the clamps (**11**) come into mutual contact deforming the pipe (**P**) for a radial stroke (**p**) substantially equal to said predetermined distance (**d**).

6. Fitting according to any one of the preceding claims, wherein said first contact annular portion (12') is substantially curved, said first inner surface (**32**) being substantially flat so that the contact between the latter and said first inner surface (**32**) occurs in a single second point of mutual tangency (**32**').

7. Fitting according to the preceding claim, wherein said ring nut (**30**) comprises a second inner surface (**33**) substantially flat and substantially perpendicular to said first inner surface (**32**), said rigid ring (**12**) including at least one third annular substantially curved contact annular portion (**12**") susceptible into come into mutual contact with said second inner surface (**33**) in a single third point of mutual tangency (**33**') so that upon the mutual screwing of said threaded coupling end member (**40**) and said ring nut (**30**) said clamping element (**10**) is centred, generating a minimum friction with the latter.

8. Fitting according to any one of the preceding claims, wherein said at least one first frusto-conical surface (**43**) has a first angulation (**α**) comprised between 4° and 8°, and preferably 6°, said at least one second frusto-conical surface (**44**) having a second angulation (**β**) comprised between 0.5° and 2.5°, and preferably 1.5°.

9. Fitting according to any one of the preceding claims, wherein said shaped inner portion (**42**) has a draft surface (**46**) substantially converging towards said axis (**X**) to come into contact with the end edge (**E**) of the pipe (**P**) upon the mutual coupling of the latter and said threaded end member (**40**).

10. Fitting according to the preceding claim, wherein said draft surface (**46**) defines means for abutting and centring the pipe (**P**).

11. Fitting according to claim 9 or 10, wherein said draft surface (**46**) is adjacent to said second frusto-conical surface (**44**) so that upon the mutual screwing of said ring nut (**30**) and of said threaded coupling end member (**40**) the end edge (**E**) of the pipe (**P**) slips beyond the same to allow the mutual contact between the end portion (**F**) of the pipe (**P**) and said second frusto-conical surface (**44**).

12. Fitting according to any one of the preceding claims, wherein said sliding surface (**48**) is substantially frusto-conical, converging with respect to the axis (**X**) and coaxial with respect to said at least one first and second frusto-conical surface (**43, 44**).

13. Fitting according to any one of the preceding claims, wherein said sliding surface (**48**) has a length (**L1**) sufficiently greater than that (**L2**) of said second frusto-conical surface (**44**) to create a chamber (**41**) for the radial expansion of said pipe (**P**) upon the mutual contact of the end edge (**E**) thereof and said abutment surface (**45**).

14. Fitting according to claim 12 or 13, wherein said shaped inner portion (**42**) has an abutment surface (**460**) interposed between said sliding surface (**48**) and said second frusto-conical surface (**44**) to act as a bottom wall of said expansion chamber (**41**), upon the mutual screwing of said ring nut (**30**) and threaded coupling end member (**40**) said second opposite end portion (**11**") of said clamps (**11**) being movable between a distal position from said abutment surface (**460**) and a position proximal thereto to come into contact with the expanded pipe portion (**P**) within said expansion chamber (**41**), so as to deform the expanded pipe portion (**P**) against said abutment surface (**460**) to form a third local pneumatic sealing means and a further safety mechanical connection element.

15. Fitting according to any one of the preceding claims, wherein said abutment surface (**45**) is defined by an internally tapered annular groove (**49**) so that the bottom wall (**49**') thereof has a width (**L3**) smaller than the thickness (**S**) of the end edge (**E**) of the pipe (**P**), so that the second pneumatic sealing is performed both on said bottom wall (**49**') and on said tapering (**49**").

## Patentansprüche

1. Schraubformstück für ein Rohr (P), umfassend einen Endabschnitt (F) mit einer Endkante (E), das Formstück umfassend:
- ein metallisches, mit Gewinde versehenes Kupplungsendglied (40), das eine Achse (X) definiert, mit einem inneren geformten Abschnitt (42), der dazu ausgelegt ist, wechselseitig dem Endabschnitt (F) des Rohrs (P) zugekehrt zu sein;
- eine metallische Ringmutter (30), die wechselseitig mit dem mit Gewinde versehenen Kupplungsendglied (40) verschraubt sein kann;
- ein metallisches Klemmelement (10), das derart an das Rohr (P) gepasst sein kann, dass es koaxial zwischen dem mit Gewinde versehenen Kupplungsendglied (40) und der Ringmutter (30) eingelegt verbleibt, wobei die Letztere eine erste Innenfläche (32) aufweist, die dazu geeignet ist, nach dem wechselseitigen Verschrauben der Ringmutter (30) und des mit Gewinde versehenen Kupplungsendglieds (40) in wechselseitigen Kontakt mit dem Klemmelement (10) zu kommen, um die relative axiale Verschiebung des Letzteren (40) und des Klemmelements (10) zu fördern;
wobei das Klemmelement (10) einen Ring (12) mit zumindest einem ersten ringförmigen Abschnitt (12') für Kontakt mit der ersten Innenfläche (32) der Ringmutter (30) und zumindest ein Paar Greifklammern (11) umfasst, die quer vom Ring (12) verlaufen, wobei jede der Klammern (11) einen ersten Endabschnitt (11'), der zum Ring (12) hin gekehrt ist, und einen zweiten, gegenüberliegenden Endabschnitt (11") aufweist;
wobei der geformte innere Abschnitt (42) des mit Gewinde versehenen Kupplungsglieds (40), in Abfolge, zumindest eine erste kegelstumpfförmige Oberfläche (43), zumindest eine Gleitfläche (48), zumindest eine zweite kegelstumpfförmige Oberfläche (44) und zumindest eine Angrenzfläche (45) umfasst, wobei die erste und zweite kegelstumpfförmige Oberfläche (43, 44) koaxial sind und zur Achse (X) hin konvergieren;
wobei das Schraubformstück zum Gebrauch mit einem Gasrohr (P) aus Metallmaterial ist, wobei der Ring (12) des Klemmelements (10) ein starrer Ring ist, wobei der zweite, gegenüberliegende Endabschnitt (11") der Klammern (11) radial zur Achse (X) hin erweitert sind, um eine Klemmbacke (110) zu definieren; und wobei ferner
das Klemmelement (10) und der geformte innere Abschnitt (42) wechselseitig derart bemessen sind, dass nach dem wechselseitigen Verschrauben der Ringmutter (30) und des mit Gewinde versehenen Kupplungsendglieds (40), beim Ausstatten eines Rohrs:
- die zumindest eine kegelstumpfförmige Oberfläche (43) in wechselseitigen Kontakt mit den Klemmen (11) kommt, um die Klemmbacken (110) dauerhaft radial auf dem Rohr (P) zusammenzudrücken, sodass die Letzteren eine ringförmige Greifnut (G) auf dem Rohr (P) ausbilden, um das Rohr (P) und das Klemmelement (10) mechanisch einstückig zu verbinden;
- im Anschluss an derartige mechanische Verbindung, die zumindest eine Gleitfläche (48) in wechselseitigen Kontakt mit den Klammern (11) kommt, um das einstückig verbundene axiale Gleiten des Rohrs (P) und des Klemmelements (10) zu ermöglichen; und
- im Anschluss an derartige mechanische Verbindung und das einstückig verbundene Gleiten:
- die zweite kegelstumpfförmige Oberfläche (44) in wechselseitigen Kontakt mit dem Endabschnitt (F) des Rohrs (P) zum radialen Zusammendrücken desselben kommt, um ein erstes pneumatisches Dichtungsmittel zu definieren; und
- die Angrenzfläche (45) des mit Gewinde versehenen Kupplungsendglieds (40) in wechselseitigem Kontakt mit der Endkante (E) des Rohrs (P) ist, um es axial zusammenzudrücken, um ein zweites pneumatisches Dichtungsmittel zu definieren.

2. Formstück nach Anspruch 1, wobei das Klemmelement (10) eine ringförmige Nut (13) umfasst, die zwischen dem starren Ring (12) und den ersten Endabschnitten (11') der Klammern (11) liegt, um das gesteuerte radiale Zusammendrücken der Letzteren zu ermöglichen.

3. Formstück nach Anspruch 1 oder 2, wobei jede der Klammern (11) eine Außenfläche (14), die dazu geeignet ist, mit der ersten kegelstumpfförmigen Oberfläche (43) in Kontakt zu kommen, und eine Innenfläche (15) aufweist, die mehrere Greifvorsprünge (16) umfasst, welche dazu geeignet sind, nach dem radialen Zusammendrücken der Klammern (11) zumindest teilweise mit dem Rohr (P) in Kontakt zu kommen.

4. Formstück nach dem vorhergehenden Anspruch, wobei die Außenfläche (14) von jeder der Klammern (11) einen zweiten Kontaktabschnitt (14') mit der ersten kegelstumpfförmigen Oberfläche (43) aufweist, wobei der zweite Kontaktabschnitt (14') im Wesentlichen gekrümmt ist, sodass er an einem einzelnen ersten Tangentialpunkt in Kontakt kommt, um wechselseitige Reibung zu minimieren.

5. Formstück nach einem der vorhergehenden Ansprüche, wobei jede der Klammern (11) einen umfänglichen Bogen definiert, wobei die Klammern von jedem Paar von aufeinanderfolgenden Klammern (11, 11) Seite an Seite angeordnet und in Bezug zueinander durch einen vorgegebenen Abstand (d) beabstandet sind, sodass die Klammern (11) nach dem Zusammendrücken des Rohrs (P) in wechselseitigen Kontakt kommen, der das Rohr (P) für einen radialen Hub (p) verformt, welcher ungefähr gleich dem vorgegebenen Abstand (d) ist.

6. Formstück nach einem der vorhergehenden Ansprüche, wobei der erste ringförmige Kontaktabschnitt (12') im Wesentlichen gekrümmt ist, wobei die erste Innenfläche (32) im Wesentlichen flach ist, sodass der Kontakt zwischen dem Letzteren und der ersten Innenfläche (32) an einem einzelnen zweiten wechselseitigen Tangentialpunkt (32') auftritt.

7. Formstück nach dem vorhergehenden Anspruch, wobei die Ringmutter (30) eine zweite Innenfläche (33) umfasst, die im Wesentlichen flach ist und im Wesentlichen senkrecht zur ersten Innenfläche (32) steht, wobei der starre Ring (12) zumindest einen dritten ringförmigen, im Wesentlichen gekrümmten ringförmigen Kontaktabschnitt (12") enthält, der dazu geeignet ist, mit der zweiten Innenfläche (33) an einem dritten wechselseitigen Tangentialpunkt (33') in Kontakt zu kommen, sodass nach dem wechselseitigen Verschrauben des mit Gewinde versehenen Kupplungsendglieds (40) und der Ringmutter (30) das Klemmelement (10) zentriert ist, wodurch eine minimale Reibung mit dem letzteren erzeugt wird.

8. Formstück nach einem der vorhergehenden Ansprüche, wobei die zumindest eine erste kegelstumpfförmige Oberfläche (43) eine erste Winkelbildung (α) aufweist, die zwischen 4° und 8° enthalten und vorzugsweise 6° ist, und die zumindest eine zweite kegelstumpfförmige Oberfläche (44) eine zweite Winkelbildung (β) aufweist, die zwischen 0,5° und 2,5° enthalten und vorzugsweise 1,5° ist.

9. Formstück nach einem der vorhergehenden Ansprüche, wobei der geformte innere Abschnitt (42) eine Zugfläche (46) aufweist, die im Wesentlichen zur Achse (X) hin konvergiert, um mit der Endkante (E) des Rohrs (P) nach dem wechselseitigen Verschrauben des Letzteren und des mit Gewinde versehenen Endglieds (40) in Kontakt zu kommen.

10. Formstück nach dem vorhergehenden Anspruch, wobei die Zugfläche (46) Mittel zum Angrenzen und Zentrieren des Rohrs (P) definiert.

11. Formstück nach Anspruch 9 oder 10, wobei die Zugfläche (46) der zweiten kegelstumpfförmigen Oberfläche (44) benachbart ist, sodass nach dem wechselseitigen Verschrauben der Ringmutter (30) und des mit Gewinde versehenen Kupplungsendglieds (40) die Endkante (E) des Rohrs (P) über dasselbe hinaus gleitet, um den wechselseitigen Kontakt zwischen dem Endabschnitt (F) des Rohrs (P) und der zweiten kegelstumpfförmigen Oberfläche (44) zu ermöglichen.

12. Formstück nach einem der vorhergehenden Ansprüche, wobei die Gleitfläche (48) im Wesentlichen kegelstumpfförmig ist, bezüglich der Achse (X) konvergiert und koaxial bezüglich der zumindest einen ersten und zweiten kegelstumpfförmigen Oberfläche (43, 44) ist.

13. Formstück nach einem der vorhergehenden Ansprüche, wobei die Gleitfläche (48) eine Länge (L1) aufweist, die genügend größer als jene (L2) der zweiten kegelstumpfförmigen Oberfläche (44) ist, um eine Kammer (41) für die radiale Ausdehnung des Rohrs (P) nach dem wechselseitigen Kontakt der Endkante (E) davon und der Angrenzfläche (45) zu schaffen.

14. Formstück nach Anspruch 12 oder 13, wobei der geformte innere Abschnitt (42) eine Angrenzfläche (460) aufweist, die zwischen der Gleitfläche (48) und der zweiten kegelstumpfförmigen Oberfläche (44) zum Wirken als Bodenwand der Expansionskammer (41) liegt, wobei nach der wechselseitigen Verschraubung der Ringmutter (30) und dem mit Gewinde versehenen Kupplungsendglied (40) der zweite, gegenüberliegende Endabschnitt (11") der Klammern (11) zwischen einer distalen Position zur Angrenzfläche (460) und einer dazu proximalen Position beweglich ist, um in Kontakt mit dem expandierten Rohrabschnitt (P) innerhalb der Expansionskammer (41) zu kommen, um den expandierten Rohrabschnitt (P) an der Angrenzfläche (460) zu verformen, um ein drittes örtliches pneumatisches Dichtungsmittel und ein weiteres mechanisches Sicherheitsverbindungselement auszubilden.

15. Formstück nach einem der vorhergehenden Ansprüche, wobei die Angrenzfläche (45) durch eine sich innen verjüngende, ringförmige Nut (49) definiert ist, sodass die Bodenwand (49') davon eine Breite (L3) aufweist, die kleiner als die Stärke (S) der Endkante (E) des Rohrs (P) ist, sodass die zweite pneumatische Abdichtung sowohl an der Bodenwand (49') als auch an der Verjüngung (49") durchgeführt wird.

## Revendications

1. Raccord à vis destiné à un tuyau (P) comprenant une partie terminale (F) ayant un bord terminal (E), le raccord comprenant :
- un élément terminal de couplage fileté métallique (40) définissant un axe (X) ayant une partie formée intérieure (42) conçue de manière à faire face mutuellement à la partie terminale (F) du tuyau (P) ;
- un écrou annulaire métallique (30) qui peut être vissé mutuellement avec ledit élément terminal de couplage fileté (40) ;
- un élément de serrage métallique (10) qui peut être monté sur le tuyau (P) afin de rester intercalé de manière coaxiale entre ledit élément terminal de couplage fileté (40) et ledit écrou annulaire (30), ce dernier ayant une première surface intérieure (32) susceptible d'entrer en contact mutuel avec ledit élément de serrage (10) lors du vissage mutuel dudit écrou annulaire (30) et dudit élément terminal de couplage fileté (40) pour favoriser la translation axiale relative de ce dernier (40) et dudit élément de serrage (10) ;
dans lequel ledit élément de serrage (10) comprend un anneau (12) ayant au moins une première partie annulaire (12') pour entrer en contact avec ladite première surface intérieure (32) dudit écrou annulaire (30) et au moins une paire de pinces de préhension (11) s'étendant transversalement à partir dudit anneau (12),
chacune desdites pinces (11) comprenant une première partie terminale (11') faisant face à l'anneau (12) et une deuxième partie terminale opposée (11") ;
dans lequel ladite partie intérieure formée (42) de l'élément de couplage fileté (40) comprend, en séquence, au moins une première surface tronconique (43), au moins une surface coulissante (48), au moins une deuxième surface tronconique (44) et au moins une surface de butée (45), lesdites au moins première et deuxième surfaces tronconiques (43, 44) étant coaxiales et convergeant vers ledit axe (X) ;
dans lequel le raccord à vis est destiné à être utilisé avec un tuyau de gaz (P) en matériau métallique, l'anneau (12) dudit élément de serrage (10) étant un anneau rigide, la deuxième partie terminale opposée (11") desdites pinces (11) étant radialement étendue vers ledit axe (X) pour définir une mâchoire de serrage (110) ; et en outre
ledit élément de serrage (10) et ladite partie intérieure formée (42) étant mutuellement dimensionnés de sorte que lors du vissage mutuel dudit écrou annulaire (30) et dudit élément terminal de couplage fileté (40), lors du raccord d'un tuyau :
- ladite au moins une première surface tronconique (43) entre en contact mutuel avec lesdites pinces (11) afin de comprimer radialement de manière permanente lesdites mâchoires de serrage (110) sur le tuyau (P), de sorte que ces dernières forment une rainure de préhension annulaire (G) sur le tuyau (P) afin de raccorder intégralement de manière mécanique le tuyau (P) et ledit élément de serrage (10) ;
- suite à ce raccordement mécanique, ladite au moins une surface de coulissement (48) entre en contact mutuel avec lesdites pinces (11) pour permettre le coulissement axial intégralement assemblé du tuyau (P) et dudit élément de serrage (10) ; et
- suite à ce raccordement mécanique et audit coulissement intégralement assemblé :
- ladite deuxième surface tronconique (44) entre en contact mutuel avec la partie terminale (F) du tuyau (P) afin de le comprimer radialement, de façon à définir un premier moyen d'étanchéité pneumatique ; et
- ladite surface de butée (65) dudit élément terminal de couplage fileté (40) est au contact mutuel avec le bord terminal (E) du tuyau (P) pour le comprimer axialement, de façon à définir un deuxième moyen d'étanchéité pneumatique.

2. Raccord selon la revendication 1, dans lequel ledit élément de serrage (10) comprend une rainure annulaire (13) intercalée entre ledit anneau rigide (12) et les premières parties terminales (11') desdites pinces (11) pour permettre la compression radiale contrôlée de ces dernières.

3. Raccord selon la revendication 1 ou 2, dans lequel chacune desdites pinces (11) comporte une surface extérieure (14) susceptible d'entrer en contact avec ladite première surface tronconique (43) et une surface intérieure (15) comprenant une pluralité de saillies de préhension (16) susceptible d'entrer en contact au moins en partie avec le tuyau (P) lors de la compression radiale desdites pinces (11).

4. Raccord selon la revendication précédente, dans lequel la surface extérieure (14) de chacune desdites pinces (11) comporte une deuxième partie de contact (14') avec ladite première surface tronconique (43), ladite deuxième partie de contact (14') étant sensiblement courbée de sorte qu'elle entre en contact en un seul premier point de tangence, de façon à minimiser un frottement mutuel.

5. Raccord selon l'une quelconque des revendications précédentes, dans lequel chacune desdites pinces (11) définit un arc circonférentiel, les pinces de chaque paire de pinces consécutives (11, 11) étant agencées côte à côte et espacées les unes par rapport aux autres d'une distance prédéterminée (d) de sorte que lors de la compression sur le tuyau (P), les pinces (11) entrent en contact mutuel en déformant le tuyau (P) pour une course radiale (p) sensiblement égale à ladite distance prédéterminée (d).

6. Raccord selon l'une quelconque des revendications précédentes, dans lequel ladite première partie annulaire de contact (12') est sensiblement courbée, ladite première surface intérieure (32) étant sensiblement plane, de sorte que le contact entre cette dernière et ladite première surface intérieure (32) se produit en un seul deuxième point de tangence mutuelle (32').

7. Raccord selon la revendication précédente, dans lequel ledit écrou annulaire (30) comprend une deuxième surface intérieure (33) sensiblement plane et sensiblement perpendiculaire à ladite première surface intérieure (32), ledit anneau rigide (12) incluant au moins une troisième partie annulaire de contact sensiblement courbée (12") susceptible d'entrer en contact mutuel avec ladite deuxième surface intérieure (33) en un seul troisième point de tangence mutuelle (33') de sorte que lors du vissage mutuel dudit élément terminal de couplage fileté (40) et dudit écrou annulaire (30), ledit élément de serrage (10) est centré, générant un frottement minimum avec ce dernier.

8. Raccord selon l'une quelconque des revendications précédentes, dans lequel ladite au moins une première surface tronconique (43) comporte une première angulation (α) comprise entre 4° et 8°, et de préférence 6°, ladite au moins une deuxième surface tronconique (44) présentant une deuxième angulation (β) comprise entre 0,5° et 2,5°, et de préférence 1,5°.

9. Raccord selon l'une quelconque des revendications précédentes, dans lequel ladite partie intérieure formée (42) comporte une surface d'étirage (46) convergeant sensiblement vers ledit axe (X) pour entrer en contact avec le bord terminal (E) du tuyau (P) lors du couplage mutuel de ce dernier et dudit élément terminal fileté (40).

10. Raccord selon la revendication précédente, dans lequel ladite surface d'étirage (46) définit un moyen de butée et de centrage du tuyau (P).

11. Raccord selon la revendication 9 ou 10, dans lequel ladite surface d'étirage (46) est adjacente à ladite deuxième surface tronconique (44) de sorte que lors du vissage mutuel dudit écrou annulaire (30) et dudit élément terminal de couplage fileté (40), le bord terminal (E) du tuyau (P) glisse au-delà de celui-ci pour permettre le contact mutuel entre la partie terminale (F) du tuyau (P) et ladite deuxième surface tronconique (44).

12. Raccord selon l'une quelconque des revendications précédentes, dans lequel ladite surface coulissante (48) est sensiblement tronconique, convergente par rapport à l'axe (X) et coaxiale par rapport à auxdites au moins une première et deuxième surfaces tronconiques (43, 44).

13. Raccord selon l'une quelconque des revendications précédentes, dans lequel ladite surface coulissante (48) comporte une longueur (L1) suffisamment supérieure à celle (L2) de ladite deuxième surface tronconique (44) afin de créer une chambre (41) pour l'expansion radiale dudit tuyau (P) lors du contact mutuel du bord terminal (E) de celui-ci et de ladite surface de butée (45).

14. Raccord selon la revendication 12 ou 13, dans lequel ladite partie intérieure formée (42) comporte une surface de butée (460) intercalée entre ladite surface coulissante (48) et ladite deuxième surface tronconique (44) pour agir en tant que paroi inférieure de ladite chambre d'expansion (41), lors du vissage mutuel dudit écrou annulaire (30) et de l'élément terminal de couplage fileté (40), ladite deuxième partie terminale opposée (11") desdites pinces (11) étant mobile entre une position distale à partir de ladite surface de butée (460) et une position proximale à celle-ci pour entrer en contact avec la partie de tuyau expansée (P) à l'intérieur de ladite chambre d'expansion (41), de façon à déformer la partie de tuyau expansée (P) par rapport à ladite surface de butée (460) afin de former un troisième moyen d'étanchéité pneumatique local et un élément supplémentaire de raccordement mécanique de sécurité.

15. Raccord selon l'une quelconque des revendications précédentes, dans lequel ladite surface de butée (45) est définie par une rainure annulaire intérieurement effilée (49) de sorte que la paroi inférieure (49') de celle-ci comporte une largeur (L3) inférieure à l'épaisseur (S) du bord terminal (E) du tuyau (P), de sorte que la deuxième étanchéité pneumatique est effectuée à la fois sur ladite paroi inférieure (49') et sur ledit effilement (49").
